(19) Europäisches Patentamt
European Patent Office
Office européen des brevets

(11) **EP 2 593 659 B1**

(12) **EUROPÄISCHE PATENTSCHRIFT**

(45) Veröffentlichungstag und Bekanntmachung des Hinweises auf die Patenterteilung:
**08.03.2017 Patentblatt 2017/10**

(21) Anmeldenummer: **11732408.7**

(22) Anmeldetag: **05.07.2011**

(51) Int Cl.:
*F02M 63/00* (2006.01)     *G01F 15/02* (2006.01)
*G01F 13/00* (2006.01)     *G01F 15/04* (2006.01)

(86) Internationale Anmeldenummer:
**PCT/EP2011/061267**

(87) Internationale Veröffentlichungsnummer:
**WO 2012/007311 (19.01.2012 Gazette 2012/03)**

(54) **THERMISCH VOLUMENNEUTRALER HUBÜBERTRAGER, UND DOSIERVENTIL**

THERMALLY NEUTRAL VOLUME STROKE TRANSMITTER, AND METERING VALVE

DISPOSITIF DE TRANSMISSION DE COURSE DE VOLUME NEUTRALE THERMIQUE, ET SOUPAPE DE DOSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.07.2010 DE 102010027278**

(43) Veröffentlichungstag der Anmeldung:
**22.05.2013 Patentblatt 2013/21**

(73) Patentinhaber: **Siemens Aktiengesellschaft 80333 München (DE)**

(72) Erfinder:
• **BACHMAIER, Georg**
  **80469 München (DE)**
• **EBELSBERGER, Gerit**
  **81737 München (DE)**
• **FISCHER, Bernhard**
  **84513 Töging A. Inn (DE)**
• **HÖGE, Michael**
  **85614 Kirchseeon (DE)**

(56) Entgegenhaltungen:
**EP-A1- 1 519 037     DD-A1- 277 522
DE-A1- 19 646 847     DE-A1-102007 016 866**

EP 2 593 659 B1

**Beschreibung**

Die vorliegende Erfindung betrifft einen Hubübertrager gemäß dem Oberbegriff des Hauptanspruchs, sowie eine Verwendung in einem Dosierventil gemäß dem Nebenanspruch.

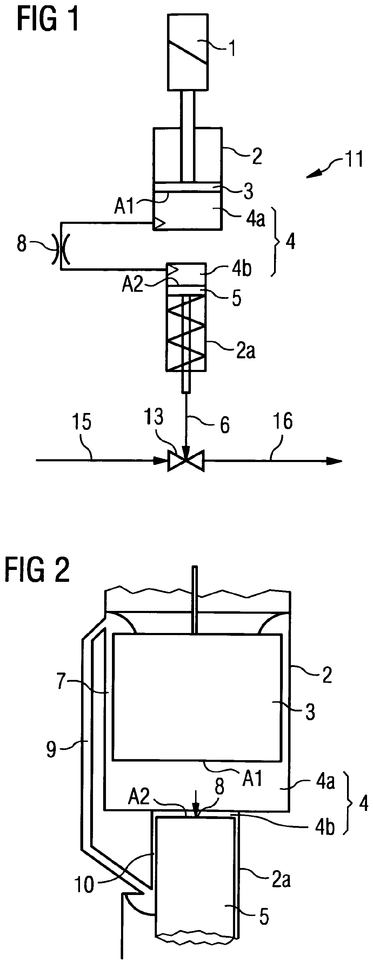

Figur 1 zeigt ein Ausführungsbeispiel eines herkömmlichen Dosierventils gemäß einem Stand der Technik. Ein erster Kolben mit der Oberfläche A1 ist in einem ersten Zylinder geführt und wird von einem Aktuator direkt angetrieben. Ein weiterer Kolben mit der Oberfläche A2 ist in Verbindung mit einer Ventilnadel. Das Volumen zwischen den Kolben ist mit einer Flüssigkeit, und zwar meist Öl, befüllt und mit einem Kanal verbunden. Um Schwingungen zu unterdrücken, ist eine Drossel in diese Strecke integriert. Bei Bewegung des Aktuators wird durch den ersten Kolben eine gewisse Flüssigkeitsmenge verdrängt, und zwar $x_1 * A_1$, die durch die Bohrung auch den zweiten Kolben bewegt, wobei $x_2 = x_1 * A_1 / A_2$. In Abhängigkeit von den gewählten Flächenverhältnissen kann eine Auslenkungsverstärkung, und zwar das Verhältnis von Aktuatorhub zu Nadelhub erzielt werden. Mit Hilfe einer Verbindung von einem schnellen Piezoaktuator und einem Hubübertrager nach Fig. 1 kann Fluid schnell und präzise dosiert werden. Diese Forderung wird bei Verbrennungsmaschinen, die mittels Gas oder Benzin arbeiten, in Zukunft immer wichtiger.

Figur 2 zeigt ein detaillierteres herkömmliches Hubübertragerkonzept gemäß einem Stand der Technik. Wird ein nicht im Bild dargestellter Aktuator betätigt, drückt er einen ersten Kolben, dadurch steigt der Druck im Hydraulikvolumen und bewegt einen zweiten Kolben. Der zweite Kolben öffnet beispielsweise das Dosierventil. Systembedingt fliest Öl durch Ringspalte ab. Dies führt zu einem zeitlich schwindenden Volumen und somit zu einem Hubverlust, der ebenso Driften genannt wird. Ein weiterer Nachteil ist die Reibung zwischen den Kolben und den Zylindern. Diese Reibung führt einerseits zu einem Hubverlust und zum anderen kann ein Kolben in einem Zylinder unbeweglich fest sitzen oder klemmen. Die Reibung kann auf herkömmliche Weise mittels Beschichten der Laufflächen, meistens mit diamantenähnlichem Kohlenstoff (Diamond Like Carbon, DLC), gemindert werden. Allerdings ist das aufwändig. Ein Hubverlust infolge Spaltströmung konnte herkömmlicherweise noch nicht beseitigt werden.

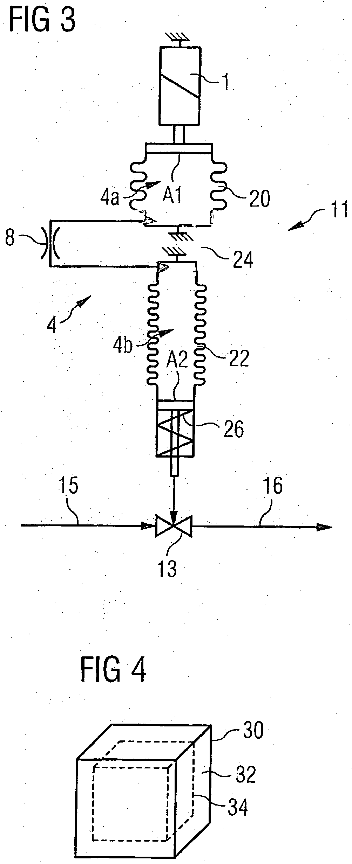

Figur 3 zeigt ein Dosierventil mit einem weiteren Konzept eines hydraulischen Hubübersetzers gemäß einem Stand der Technik. Das Hydraulikfluid befindet sich in dichten Metallbälgen, die zusammen das Hydraulikvolumen bilden. Die Kolben sind als Stirnflächen angeschweißt. Sie brauchen sich nicht mehr in einem Hydraulikfluid zu bewegen. Die Kolbenreibung im Hydraulikvolumen entfällt, ebenso die Problematik mit der Spaltströmung. Ein derartiges Konzept weist aber immer noch folgenden Nachteil auf: Bei Temperaturänderung ändert sich das Volumen von Metallbälgen entsprechend des dazugehörigen Volumenausdehnungskoeffizienten. Die eingeschlossene Flüssigkeit hat einen anderen Volumenausdehnungskoeffizienten. Hydrauliköle, die hier bevorzugt zur Verwendung kommen, haben typischerweise einen sehr hohen Volumenausdehnungskoeffizienten. Dies führt zu dem unerwünschten Effekt, dass sich die Flüssigkeit stärker ausdehnt, als ein Metallbalg. Dadurch braucht das Öl bei Temperaturanstieg mehr Volumen. Dies führt zu einem Druckanstieg im Hydraulikvolumen 4 und letztlich zu einer unerwünschten Leckage, wenn schließlich das Ventil aufgedrückt wird.

Die DE 10 2007 016866 A1 offenbart einen Kraftstoffinjektor mit einem Einspritzventilglied zum Einspritzen von Kraftstoff in den Brennraum einer selbstzündenden Verbrennungskraftmaschine, wobei das Einspritzventilglied über einen Aktor direkt betätigt wird, mit welchem der Druck auf einem das Einspritzventilglied beaufschlagenden Steuerraum über einen Koppler beeinflussbar ist, wobei eine Drosselplatte, über welche der Kopplerraum und der Steuerraum hydraulisch miteinander in Verbindung stehen, vom Haltekörper des Kraftstoffinjektors umschlossen ist.

Die DD 277 522 A1 offenbart einen Kraftsensor für den Einsatz unter extremen Bedingungen wie die Messung hoher Kräfte bei hohen Drücken und hohen Temperaturen, der aus einem Verformungs- und einem Sensorelement besteht und in zwei Teile getrennt ist.

Die DE 196 46 847 A1 offenbart eine Anordnung eines modularen hydraulischen Stellwegtransformators mit variierbarem Übersetzungsverhältnis zur Übersetzung von Stellwagen von Festkörperenergiewandlern oder dergleichen.

Es ist Aufgabe der vorliegenden Erfindung einen thermisch volumenneutralen Hubübertrager, insbesondere für ein Dosierventil zur schnellen und genauen Dosierung einer großen Menge eines Fluids, insbesondere eines Gases, bereitzustellen. Das Dosierventil soll thermisch volumenneutral sein und keinen hydraulischen Kompensator erfordern. Ebenso soll ein zusätzliches Spielausgleichselement für einen Aktuator vermieden werden.

Die Aufgabe wird durch einen Hubübertrager gemäß dem Hauptanspruch, ein Dosierventil gemäß dem Nebenanspruch und Verwendungen gemäß den weiteren Nebenansprüchen gelöst.

Gemäß einem ersten Aspekt wird ein Hubübertrager bereitgestellt, wobei ein mittels einer ersten wirksamen Querschnittsfläche A1 veränderbares von einem ersten Gehäusebestandteil umfasstes erstes Volumen und ein mittels einer zweiten wirksamen Querschnittsfläche A2 veränderbares von einem zweiten Gehäusebestandteil umfasstes zweites Volumen mit einer Flüssigkeit gefüllt und mittels einer Drosselbohrung derart in einem Flüssigkeitsaustausch miteinander erzeugt sind, dass ein Hub der zweiten wirksamen Querschnittsfläche dem Produkt eines Hubs der ersten wirksamen Querschnittsfläche mit einem Verhältnis aus der ersten wirksamen Querschnittsfläche zu der zweiten wirksamen Querschnittsfläche entspricht, wobei ein Gesamtgehäuse ein Gesamtvolumen aus der Summe aus erstem Volumen und zweitem Volumen äußerlich begrenzt. Der Hubübertrager zeichnet sich dadurch aus, dass im Gesamtvolumen mindestens ein Verdrängerkörper positioniert ist, wobei das Gesamtgehäuse, die Flüssigkeit und alle Verdrängerkörper derart aufeinander abgestimmt sind, dass eine durch eine Temperaturänderung bewirkte Volumenänderung des Gesamtgehäuses einer durch diese Temperaturänderung bewirkten gemeinsamen Volumenänderung der Flüssigkeit und aller Verdrängerkörper entspricht wobei der erste Gehäusebestandteil mittels eines ersten Balgs und/oder der zweite Gehäusebestandteil mittels eines zweiten Balgs erzeugt sind, dadurch gekennzeichnet, dass

jeweilige Erstreckungen eines Verdrängerkörpers quer zu einer Richtung des Hubs in konkave Ausbuchtungen des dazugehörigen Balgs hinein erzeugt sind..

Erster und zweiter Gehäusebestandteil erzeugen zusammen das Gesamtgehäuse. Zusätzlich kann eine Leitung der Drosselbohrung als dritter Gehäusebestandteil des Gesamtgehäuses berücksichtigt werden. Gemäß dem Wirkprinzip des Hubübertragers ist bei einer konstanten Temperatur aufgrund der Inkompressibilität der Flüssigkeit ein Volumen eines Gesamtgehäuses und der von diesem umfassten Flüssigkeit bei jedem Hub konstant.

Gemäß einem zweiten Aspekt wird ein erfindungsgemäßer Hubübertrager zur Ansteuerung eines Dosierventils verwendet, wobei die erste wirksame Querschnittsfläche an einem Piezoaktuator und die zweite wirksame Querschnittsfläche an das Dosierventil mechanisch gekoppelt sind.

Gemäß einem dritten Aspekt wird ein erfindungsgemäßes Dosierventil zum dosierten Zuführen eines Fluids in ein weiteres Volumen verwendet.

Erfindungsgemäß wird eine wirksame Querschnittsfläche mittels deren Hubbewegung zur Vergrößerung oder Verkleinerung des dazugehörigen Volumens verwendet. Daraus ergibt sich eine wirksame Querschnittsfläche aus dem Quotienten aus Volumenänderung geteilt durch den Hub der wirksamen Querschnittsfläche.

Grundsätzlich können das veränderbare erste und zweite Volumen mittels eines Zylinders mit Kolben oder mittels Bälgen erzeugt sein. Bei einer Temperaturänderung kann sich das Volumen der Kolben oder Bälge entsprechend deren Volumenausdehnungskoeffizienten ändern. Die eingeschlossene Flüssigkeit hat dabei einen anderen Volumenausdehnungskoeffizienten. Hydrauliköle, die verwendet werden, haben einen sehr hohen Volumenausdehnungskoeffizienten. Dies führt zu einem unerwünschten Effekt, dass sich die Flüssigkeit stärker ausdehnt als ein Kolben oder ein Balg. Dadurch braucht das Öl bei Temperaturanstieg mehr Volumen und verschafft sich dieses durch ein unerwünschtes Längen der Kolben oder Bälge. Dies führt zu einer unerwünschten Leckage. Dieser Effekt betrifft grundsätzlich alle das erste und zweite Volumen erzeugenden Ausführungsformen.

Erfindungsgemäß werden in dem ersten und/oder zweiten Volumen erste und/oder zweite Verdrängerkörper eingebracht. Ein erfindungsgemäßer Hubübertrager besteht dann lediglich aus zwei Volumeneinfassungen, aus dem Hydrauliköl und den Verdrängerkörpern. Diese Verdrängerkörper werden erfindungsgemäß in die Volumeneinfassungen eingelegt und weisen einen sehr geringen Volumenausdehnungskoeffizienten auf. Durch eine geeignete Kombination von Geometrie und Material bleibt der erfindungsgemäße Hubübertrager bei Temperaturänderungen im Druck neutral. Beispielsweise entsteht bei einer Erwärmung infolge einer Dehnung der Volumeneinfassungen genauso viel zusätzliches Volumen, wie Fluid und Verdrängerkörper zusammen brauchen, um sich auszudehnen. Auf diese Weise bleibt ein mit einem erfindungsgemäßen Hubübertrager betriebenes Dosierventil als Ganzes druckfrei und geschlossen. Eine mögliche Bestimmung eines Volumens eines Verdrängerkörpers wird in Verbindung mit Figur 4 offenbart.

Ein erfindungsgemäßer Hubübertrager, der insbesondere sehr kleine Hübe überträgt, beispielsweise im Bereich von 1 $\mu$m bis 500 $\mu$m, erfordert lediglich kleine mechanische Bewegungen seiner Bestandteile. Ein erfindungsgemäßer Hubübertrager weist zudem weder hohe Reibungsverluste noch entsprechende Verschleißerscheinungen infolge Abriebs auf. Ein erfindungsgemäßer Hubübertrager wird mit geeignet gestalteten und ausgewählten Verdrängerkörpern so bereitgestellt, dass sich die Druckverhältnisse bei Temperaturänderung nicht verändern. Deshalb ist bei einem erfindungsgemäßen Hubübertrager eine konstant ausreichende Dichtigkeit ebenso bei Temperaturänderungen gegeben. Somit weist ein erfindungsgemäßer Hubübertrager die Vorteile auf, dass keine fluidische Reibung im Hubübertrager, keine mechanische Reibung im Hubübertrager, eine Druckneutralität bei Temperaturänderungen, ein Vermeiden eines Leerhubes und damit eines Verlustes von Aktorhub, ein Vermeiden eines hydraulischen Kompensators und ein Dauerbetrieb ermöglicht werden.

Weitere vorteilhafte Ausgestaltungen werden in Verbindung mit den Unteransprüchen beansprucht.

Gemäß einer vorteilhaften Ausgestaltung kann ein Produkt aus Volumen und Volumenausdehnungskoeffizient des Gesamtgehäuses der Summe eines Produkts aus Volumen und Volumenausdehnungskoeffizient der Flüssigkeit und von jeweiligen Produkten aus Volumen und Volumenausdehnungskoeffizienten aller Verdrängerkörper entsprechen.

Gemäß einer weiteren vorteilhaften Ausgestaltung kann mindestens ein Bereich des Gesamtgehäuses zusätzlich oder alternativ der mindestens eine Verdrängerkörper sein und dieser Bereich dann hinsichtlich Volumen und Volumenausdehnungskoeffizient nicht dem Gesamtgehäuse, sondern den Verdrängerkörpern zugeordnet sein.

Gemäß einer weiteren vorteilhaften Ausgestaltung kann der erste Gehäusebestandteil mittels eines ersten Zylinders und eines darin geführten ersten Kolbens und/oder der zweite Gehäusebestandteil mittels eines zweiten Zylinders und eines darin geführten zweiten Kolbens erzeugt sein.

Gemäß einer weiteren vorteilhaften Ausgestaltung kann mindestens einer der beiden Kolben zusätzlich oder alternativ der mindestens eine Verdrängerkörper sein und dieser Kolben dann hinsichtlich Volumen und Volumenausdehnungskoeffizient nicht dem Gesamtgehäuse, sondern den Verdrängerkörpern zugeordnet sein.

Gemäß einer weiteren vorteilhaften Ausgestaltung kann das Material von Verdrängerkörpern Quarzglas, das Material eines Gesamtgehäuses Stahl und die Flüssigkeit Hydrauliköl sein.

Gemäß einer weiteren vorteilhaften Ausgestaltung kann eine Erstreckung eines Verdrängerkörpers entlang einer Richtung des Hubs über eine Erstreckung des dazugehörigen Balgs entlang dieser Richtung hinausgehen.

Gemäß einer weiteren vorteilhaften Ausgestaltung kann die erste wirksame Querschnittsfläche an einen Aktuator und die zweite wirksame Querschnittsfläche an das Dosierventil mechanisch gekoppelt sein.

Gemäß einer weiteren vorteilhaften Ausgestaltung kann die erste wirksame Querschnittsfläche durch einen ersten Kolben und/oder die zweite wirksame Querschnittsfläche durch einen zweiten Kolben erzeugt sein.

Gemäß einer weiteren vorteilhaften Ausgestaltung kann die erste wirksame Querschnittsfläche den ersten Balg senkrecht zu einer Richtung des Hubs zu einem Piezoaktuator hin begrenzen und/oder die zweite wirksame Querschnittsfläche den zweiten Balg senkrecht zu der Richtung des Hubs zum Dosierventil hin begrenzen.

Gemäß einer weiteren vorteilhaften Ausgestaltung kann die zweite wirksame Querschnittsfläche an eine Kugel oder eine Nadel des Dosierventils zum Öffnen und Schließen des Dosierventils mechanisch gekoppelt bzw. mechanisch mit der Kugel oder Nadel verbunden sein.

Gemäß einer weiteren vorteilhaften Ausgestaltung kann zwischen zweiter wirksamer Querschnittsfläche und dem Dosierventil eine Rückstellfeder zum Erzeugen einer Gegenkraft gegen ein Vergrößern des zweiten Volumens positioniert sein.

Gemäß einer weiteren vorteilhaften Ausgestaltung kann ein erfindungsgemäßes Dosierventil zum dosierten Zuführen von Gas oder Benzin in eine Brennkammer verwendet werden.

Die Erfindung wird anhand von Ausführungsbeispielen in Verbindung mit den Figuren näher beschrieben. Es zeigen:

Figur 1    ein Ausführungsbeispiel eines Dosierventils gemäß einem Stand der Technik;
Figur 2    ein Ausführungsbeispiel eines Hubübertragers gemäß einem Stand der Technik;
Figur 3    ein weiteres Ausführungsbeispiel eines Dosierventils gemäß einem Stand der Technik;
Figur 4    eine erfindungsgemäße Bestimmung eines Volumens eines Verdrängerkörpers;
Figur 5    ein Ausführungsbeispiel eines erfindungsgemäßen Hubübertragers.

Figur 1 zeigt ein herkömmliches Ausführungsbeispiel eines Dosierventils gemäß einem Stand der Technik. Figur 1 zeigt ein Funktionsprinzip eines Dosierventils in schematischer Darstellung. Ein Kolben 3 mit einer Oberfläche A1 ist in einem Zylinder 2 geführt und wird von einem Aktuator 1 direkt angetrieben. Ein weiterer Kolben 5 mit einer Oberfläche A2 ist in Verbindung mit der Ventilnadel 6. Ein Volumen 4 zwischen den Kolben ist mit einer Flüssigkeit, die meist Öl ist, befüllt und weist einen Kanal beziehungsweise Verbindungsleitung mit einer Drosselbohrung 8 auf. Um Schwingungen zu unterdrücken, ist diese Drosselbohrung 8 in diese Kanalstrecke integriert. Bei Bewegung des Aktuators 1 um einen Hub x1 wird durch den Kolben 2 eine bestimmte Flüssigkeitsmenge verdrängt, und zwar x1*A1, die durch die Bohrung ebenso den Kolben 5 um einen Hub x2 bewegt. Es gilt die Gleichung x2=x1*A1/A2. In Abhängigkeit von den gewählten Flächenverhältnissen kann eine Auslenkungsverstärkung, das heißt ein Verhältnis von Aktuatorhub x1 zu Nadelhub x2, erzielt werden. Mit Hilfe einer Verbindung von einem schnellen Piezoaktuator 1 und dem Hubübertragerkonzept gemäß Figur 1 kann schnell und präzise eine große Menge an Fluid, insbesondere Gas, dosiert werden. Diese Forderung wird bei Verbrennungsmaschinen, die beispielsweise Gas oder Benzin verwenden, in Zukunft immer wichtiger. Beispielsweise zeigt Figur 1 mit den Bezugzeichen 15 einen Gaseinlass, mit dem Bezugzeichen 16 einen Brennraum und mit dem Bezugzeichen 13 ein Dosierventil und mit dem Bezugzeichen 11 den Hubübertrager. Fig. 1 zeigt ein Gesamtgehäuse, das ein Gesamtvolumen 4 aus der Summe aus einem ersten Volumen 4a und einem zweitem Volumen 4b äußerlich begrenzt. Das Gesamtgehäuse wird dabei mittels eines ersten Zylinders 2 und eines darin geführten ersten Kolbens 3 und eines zweiten Zylinders 2a und eines darin geführten zweiten Kolbens 5 ausgebildet.

Figur 2 zeigt ein Ausführungsbeispiel eines herkömmlichen Hubübertragers gemäß einem Stand der Technik in ausführlicherer Darstellung. In Figur 2 ist ein herkömmliches Hubübertragerkonzept ausführlicher dargestellt. Zusätzlich ist eine weitere Verbindungsbohrung 9 für einen schnelleren Druckausgleich dargestellt. Diese Verbindung stellt einen konstanten Druck in den verbundenen Kammern ein. Dies hat den Vorteil, dass Längen- und Volumenänderungen, die durch Temperaturänderungen verursacht sind, ausgeglichen werden können.

Wird ein Aktuator 1 betätigt steigt der Druck in der Kammer 4 und es bewegt sich der Kolben 5. Systembedingt fliest Öl durch Ringspalte ab. Dies führt zu einem zeitlich schwindenden Volumen und somit zu einem Hubverlust, der ebenso "Driften" genannt wird. Ein weiterer Nachteil ist die Reibung zwischen den Kolben 3 und 5 und den jeweils dazugehörigen Zylindern 2 und 2a. Diese Reibung führt einerseits zu einem Hubverlust. Des Weiteren kann sich ein Kolben "fressen", das heißt er kann im Zylinder unbeweglich werden. Bezugszeichen 7 bezeichnet einen Ringspalt zwischen Kolben 3 und Zylinder 2. Bezugszeichen 10 bezeichnet einen Ringspalt zwischen Kolben 5 und Zylinder 2a. Bezugszeichen 9 bezeichnet eine zusätzliche Verbindungsbohrung zum schnellen Druckausgleich. Bezugszeichen 8 bezeichnet eine Drosselbohrung (orifice), entsprechend Fig. 1. Die Probleme von solchen herkömmlichen Hubübertagern sind Verschleiß und Driften. Ein herkömmlicher Verschleiß bei herkömmlichen Hubübertragern und herkömmlichen Dosierventilen konnte durch Beschichten von Laufflächen, meist mit diamantenähnlichem Kohlenstoff, das heißt "Diamond Like Carbon (DLC)" gemindert werden. Aber das Beschichten ist ein zusätzlicher und aufwändiger Verfahrensschritt. Ein herkömmlicher Hubverlust infolge Spaltströmung kann herkömmlicherweise nicht beseitigt werden.

Figur 3 zeigt ein weiteres Ausführungsbeispiel eines Dosierventils gemäß einem Stand der Technik. Ein möglicher Aufbau weist beispielsweise zwei Metallbälge 20 und 22 auf, die mit einer Flüssigkeit gefüllt sind und durch eine Drosselbohrung 8 verbunden sind. Bezugszeichen 4 bezeichnet die Summe der jeweiligen Innenräume der beiden Bälge 20 und 22 und stellt damit ein sogenanntes Hydraulikvolumen dar. Wenn der Aktuator 1 angesteuert wird und sich dabei beispielsweise ausdehnt, dann steigt der Druck im ersten Metallbalg 20. Der Druck wirkt mittels der Drosselbohrung 8 fort und führt dazu, dass der zweite Metallbalg 22 gegen die Kraft einer Rückstellfeder 26 eine Nadel oder Kugel bewegt und damit einen Injektor öffnet. Der Hub des Aktuators 1 wird dabei entsprechend der Querschnitte der Metallbälge 20 und 22 verstärkt. Diese Anordnung wirkt damit als hydraulischer Hubübersetzer. Diese Anordnung erfordert keinen bewegten Kolben und umgeht auf diese Weise eine damit verbundene vorstehend beschriebene Reibungsproblematik. Ein Daueröffnungsbetrieb ist mit einer derartigen Anordnung ebenfalls möglich, da der vom Aktuator 1 aufgebaute Druck erhalten bleibt, und somit kein Driftverhalten gegeben ist. Gemäß dieser erfindungsgemäßen Ausführungsform eines Hubübertragers 11 zur Ansteuerung eines Dosierventils 13, die anstelle von Metallzylindern und Metallkolben Metallbälge 20 und 22 verwendet, sind Reibung und ein Driftverhalten gemäß diesem Konzept nicht mehr existent.Fig. 3 zeigt ein mittels einer ersten wirksamen Querschnittsfläche A1 veränderbares von einem ersten Gehäusebestandteil 20 umfasstes erstes Volumen 4a und ein mittels einer zweiten wirksamen Querschnittsfläche A2 veränderbares von einem zweiten Gehäusebestandteil 22 umfasstes zweites Volumen 4b, die mit einer Flüssigkeit 32 gefüllt und mittels einer Drosselbohrung 8 derart in einem Flüssigkeitsaustausch miteinander erzeugt sind, dass ein Hub der zweiten wirksamen Querschnittsfläche A2 dem Produkt eines Hubs der ersten wirksamen Querschnittsfläche A1 mit einem Verhältnis aus der ersten wirksamen Querschnittsfläche A1 zu der zweiten wirksamen Querschnittsfläche A2 entspricht. Ein Gesamtvolumen 4 aus der Summe aus erstem Volumen 4a und zweitem Volumen 4b wird von einem Gesamtgehäuse äußerlich begrenzt.

Ein derartiges Konzept gemäß Figur 3 weist allerdings einen Nachteil einer Temperaturänderung derart auf, dass unerwünschte Leckagen entstehen können.

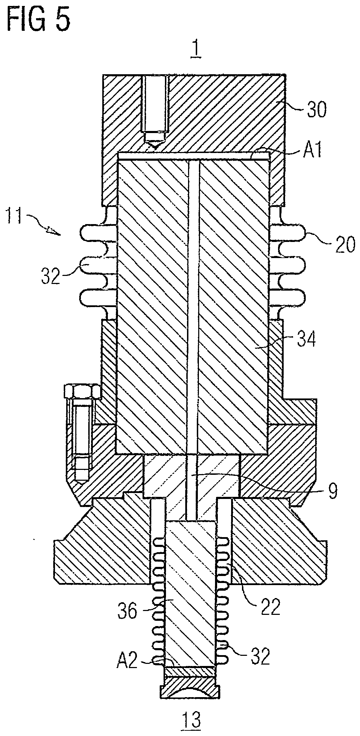

Gemäß der vorliegenden Erfindung wird in eine Anordnung gemäß Figur 5 zusätzlich zur Flüssigkeit in den Bälgen 20 und 22 sowie in einer Verbindungsleitung 9 in mindestens einem der Bälge 20 und 22 zur Verdrängung der Flüssigkeit jeweils ein erster Verdrängerkörper 34 und/oder ein zweiter Verdrängerkörper 36 mit jeweiliger Verdrängervolumen $V_v$ und jeweiligen Volumenausdehnungskoeffizienten $\gamma_V$ eingebracht oder positioniert. Auf diese Weise wird beispielsweise eine stärkere Ausdehnung einer Flüssigkeit als die Ausdehnung eines Gehäuses des ersten und/oder zweiten Volumens dadurch kompensiert, dass ein Ausgleichskörper einen Volumenausdehnungskoeffizienten aufweist, der so klein ist, dass die Ausdehnung durch die Flüssigkeit kompensiert wird. Eine genaue Berechnung dieser Abhängigkeiten zeigt Figur 4. Fig. 5 zeigt ein Gesamtgehäuse, das ein Gesamtvolumen aus der Summe aus einem ersten Volumen und einem zweitem Volumen äußerlich begrenzt. Das Gesamtgehäuse wird dabei mittels eines ersten Balgs 20 und eines zweiten Balgs 22 ausgebildet. Damit ist das Gesamtvolumen , welches ebenso als Hydraulikvolumen bezeichnet werden kann, der gesamte Innenraum der beiden Bälge 20 und 22 zusammen.

Figur 4 zeigt ein Ausführungsbeispiel einer erfindungsgemäßen Bestimmung des Volumens eines jeweiligen Verdrängerkörpers. Figur 4 zeigt ein geschlossenes System von drei Materialien, das sich immer so gestalten lässt, dass es bei Temperaturänderungen druckfrei oder frei von Spannungen bleibt. Dabei bezeichnet 30 ein Gehäuse, Bezugszeichen 32 eine Flüssigkeit und Bezugszeichen 34 einen erfindungsgemäßen Verdrängerkörper. Ein erfindungsgemäßes erstes oder zweites Volumen kann grundsätzlich beliebig mittels eines Gehäuses 30 bereitgestellt werden. Besonders vorteilhaft sind die Ausgestaltungen des Gehäuses als Kolben oder als Bälge. Ein besonders vorteilhaftes Gehäusematerial ist insbesondere Stahl. Andere Metalle sind ebenso verwendbar. Die Flüssigkeit 32 ist aufgrund von nachfolgenden Berechnungen besonders vorteilhaft ein Hydrauliköl und das Material des Verdrängungskörpers 34 ist besonders vorteilhaft Glas, insbesondere Quarzglas. Grundlage für die Berechnung und der darauf beruhenden Auswahl der Materialien ist folgende Ausgleichsbedingung für eine Temperaturänderung $\Delta T$:

$$(0)\ V_B\ \gamma_B\ \Delta T\ =\ V_F\ \gamma_F\ \Delta T\ +\ V_V\ \gamma_V\ \Delta T$$

Damit errechnet sich das Verdrängervolumen zu

$$(1) \quad V_V = (V_B \, \gamma_B - V_F \, \gamma_F)/\gamma_V$$

$V_B$ = Volumen Balg
$V_F$ = Volumen Fluid
$V_V$ = Volumen Verdrängerkörper
$\gamma_B$ = Volumenausdehnungskoeffizient
$\gamma_F$ = Volumenausdehnungskoeffizient Fluid
$\gamma_V$ = Volumenausdehnungskoeffizient Verdrängerkörper

Beispiele für geeignete Volumenausdehnungskoeffizienten:

- Fluide wie die in Dosierventilen hauptsächlich verwendeten Silikonöle haben einen Volumenausdehnungskoeffizienten $\gamma$ von typischerweise 500...1000*$10^{-6}$/K. Das ist im Vergleich zu Stahl, der im Allgemeinen als Gehäusematerial verwendet wird, sehr groß.
- Stahl als typisches Gehäusematerial hat $\gamma$ = 30-48*$10^{-6}$/K
- Verdrängerkörper sollen einen kleinen Volumenausdehnungskoeffizienten haben. Dies erfüllt beispielsweise Glas mit $\gamma$ =1,5-3*$10^{-6}$/K. Erfindungsgemäß werden das erste und das zweite Volumen mittels eines Gehäuses 30 bereitgestellt. Besonders vorteilhafte Ausgestaltungen von Gehäusen 30 können Kolben oder Bälge sein. Eine bevorzugte Flüssigkeit für einen erfindungsgemäßen Hubübersetzer ist beispielsweise Hydrauliköl. Entsprechend einer Herleitung gemäß Figur 4 eignet sich insbesondere Quarzglas als ein Material für einen ersten Verdrängerkörper in dem ersten Volumen und/oder dem zweiten Verdrängerkörper in dem dazugehörigen zweiten Volumen.

Figur 5 zeigt ein erfindungsgemäßes Ausführungsbeispiel eines Hubübertragers 11. Bezugszeichen 30 kennzeichnet ein Gehäuse in dem insbesondere ein erster Balg 20 und ein Verdrängerkörper 34 integriert sind. Eine Verbindungsbohrung 9 führt von dem ersten Volumen zu dem zweiten Volumen, das heißt von dem ersten Balg 20 zu dem zweiten Balg 22. In dem mittels des zweiten Balgs 22 erzeugten zweiten Volumen ist ein zweiter Verdrängerkörper 36 integriert. Um den Gleichungen (0) und (1) zu genügen ist der erste Verdrängerkörper 34 und sein Volumen derart groß, dass das erste Volumen durch diesen ersten Verdrängerkörper 34 fast vollständig ausgefüllt ist. Die dazugehörige Flüssigkeit 32 ist aber wirksam vorhanden. Das heißt im oberen ersten Volumen und dem unteren zweiten Volumen der Figur 5 sind alle Bedingungen gemäß der Berechnung gemäß der Figur 4 erfüllt. Das erste Volumen in Figur 5 wird durch das Gehäuse 30 und den ersten Balg bereitgestellt. Das untere zweite Volumen wird durch den zweiten Balg 22 bereitgestellt. Gemäß Figur 5 geht die Erstreckung des oberen Verdrängerkörpers 34 entlang der Richtung eines Hubs über die Erstreckung des dazugehörigen Balgs 20 entlang dieser Richtung hinaus. Zudem sind jeweilige Ersteckungen des ersten Verdrängerkörpers 34 quer zu der Richtung eines Hubs in konkave Ausbuchtungen des dazugehörigen Balgs 20 hinein erzeugt. Ein Hub erfolgt in axialer Richtung des ersten Verdrängerkörpers 34 und des zweiten Verdrängerkörpers 36. Zur Ausbildung eines erfindungsgemäßen Dosierventils mittels des erfindungsgemäßen Hubübertragers 11 gemäß Figur 5 ist eine obere erste wirksame Querschnittsfläche an einem Aktuator 1 und eine zweite wirksame Querschnittsfläche mit einem unterm Dosierventil 13 mechanisch verbunden. Eine vorteilhafte Ausführungsform eines Aktuators 1 ist in Piezoaktuator.

Beispielsweise liegen die Hübe der wirksamen Querschnittsflächen im Mikrometerbereich. Auf diese Weise erfolgen lediglich sehr kleine entsprechende Verschiebungen der wirksamen Querschnittsflächen in axiale Richtungen der Bälge. Auf diese Weise kann man ebenso von erfindungsgemäßen nahezu mechanisch unbewegten Hubübertragern sprechen. Des Weiteren sind Kombinationen von Bälgen mit Zylinder-Kolben-Systemen möglich. Beispielsweise kann ein erster Gehäusebestandteil mittels eines in einem Zylinder geführten Kolben und ein zweiter Gehäusebestandteil mittels eines Balgs erzeugt sein, wobei ein erster Verdrängerkörper dann der dem Zylinder zugeordnete Kolben und ein zweiter Verdrängerkörper im Balg positioniert sein kann.

Erstes Gehäusebestandteil 20 und zweites Gehäusebestandteil 22 erzeugen das Gesamtgehäuse. Zusätzlich kann noch zu der Verbindungsbohrung 9 eine Leitung einer Drosselbohrung 8 berücksichtigt werden.
Im Gesamtvolumen 4 sind zwei Verdrängerkörper 34 und 36 positioniert. Das Gesamtgehäuse 20 und 22, die Flüssigkeit 32 und alle Verdrängerkörper 34 und 36 sind derart aufeinander abgestimmt, dass eine durch eine Temperaturänderung bewirkte Volumenänderung des Gesamtgehäuses 20 und 22 einer durch diese Temperaturänderung bewirkten gemeinsamen Volumenänderung der Flüssigkeit 32 und aller Verdrängerkörper, und zwar hier 34 und 36 entspricht. Zur weiteren vorteilhaften Verkleinerung des Volumens der Flüssigkeit 32 sind vorteilhaft jeweilige Erstreckungen des Verdrängerkörpers 34 quer zu einer Richtung des Hubs in konkave Ausbuchtungen des dazugehörigen Balgs 20 hinein erzeugt.

**Patentansprüche**

1. Hubübertrager (11), wobei ein mittels einer ersten wirksamen Querschnittsfläche (A1) veränderbares von einem ersten Gehäusebestandteil (2,3;20) umfasstes erstes Volumen (4a) und ein mittels einer zweiten wirksamen Querschnittsfläche (A2) veränderbares von einem zweiten Gehäusebestandteil (2a,5;22) umfasstes zweites Volumen (4b) mit einer Flüssigkeit (32) gefüllt und mittels einer Drosselbohrung (8) derart in einem Flüssigkeitsaustausch miteinander erzeugt sind, dass ein Hub der zweiten wirksamen Querschnittsfläche dem Produkt eines Hubs der ersten wirksamen Querschnittsfläche mit einem Verhältnis aus der ersten wirksamen Querschnittsfläche zu der zweiten wirksamen Querschnittsfläche entspricht, wobei ein Gesamtgehäuse (2,3,2a,5;20,22) ein Gesamtvolumen (4) aus der Summe aus erstem Volumen (4a) und zweitem Volumen (4b) äußerlich begrenzt, **dadurch gekennzeichnet, dass** im Gesamtvolumen (4) mindestens ein Verdrängerkörper (34,36) positioniert ist, wobei das Gesamtgehäuse (2,3,2a,5;20,22), die Flüssigkeit (32) und alle Verdrängerkörper (34,36) derart aufeinander abgestimmt sind, dass eine durch eine Temperaturänderung bewirkte Volumenänderung des Gesamtgehäuses (2,3,2a,5;20,22) einer durch diese Temperaturänderung bewirkten gemeinsamen Volumenänderung der Flüssigkeit (32) und aller Verdrängerkörper (34, 36) entspricht, wobei der erste Gehäusebestandteil mittels eines ersten Balgs (20) und/oder der zweite Gehäusebestandteil mittels eines zweiten Balgs (22) erzeugt sind, wobei jeweilige Erstreckungen eines Verdrängerkörpers (34) quer zu einer Richtung des Hubs in konkave Ausbuchtungen des dazugehörigen Balgs (20) hinein erzeugt sind.

2. Hubübertrager (11) nach Anspruch 1,
   **dadurch gekennzeichnet, dass**
   ein Produkt aus Volumen und Volumenausdehnungskoeffizient des Gesamtgehäuses (2, 3, 2a, 5; 20, 22) der Summe eines Produkts aus Volumen und Volumenausdehnungskoeffizient der Flüssigkeit (32) und von jeweiligen Produkten aus Volumen und Volumenausdehnungskoeffizienten aller Verdrängerkörper (3,5;34,36) entspricht.

3. Hubübertrager (11) nach Anspruch 1 oder 2,
   **dadurch gekennzeichnet, dass**
   mindestens ein Bereich des Gesamtgehäuses zusätzlich oder alternativ der mindestens eine Verdrängerkörper ist und dieser Bereich dann hinsichtlich Volumen und Volumenausdehnungskoeffizient nicht dem Gesamtgehäuse, sondern den Verdrängerkörpern zugeordnet ist.

4. Hubübertrager (11) nach Anspruch 1, 2 oder 3,
   **dadurch gekennzeichnet, dass**
   der erste Gehäusebestandteil mittels eines ersten Zylinders (2) und eines darin geführten ersten Kolbens (3) und/oder der zweite Gehäusebestandteil mittels eines zweiten Zylinders (2a) und eines darin geführten zweiten Kolbens (5) erzeugt sind.

5. Hubübertrager (11) nach Anspruch 4,
   **dadurch gekennzeichnet, dass**
   mindestens einer der beiden Kolben (3, 5) zusätzlich oder alternativ der mindestens eine Verdrängerkörper ist und dieser Kolben (3, 5) dann hinsichtlich Volumen und Volumenausdehnungskoeffizient nicht dem Gesamtgehäuse, sondern den Verdrängerkörpern zugeordnet ist.

6. Hubübertrager (11) nach einem der Ansprüche 1 bis 5,
   **dadurch gekennzeichnet, dass**
   das Material von Verdrängerkörpern (3, 5; 34, 36) Quarzglas, das Material eines Gesamtgehäuses (20, 22) Stahl und die Flüssigkeit (32) Hydrauliköl ist.

7. Hubübertrager (11) nach einem der vorangehenden Ansprüche,
   **dadurch gekennzeichnet, dass**
   eine Erstreckung eines Verdrängerkörpers (34) entlang einer Richtung des Hubs über eine Erstreckung des dazugehörigen Balgs (20) entlang dieser Richtung hinausgeht.

8. Dosierventil (13) mit einem Hubübertrager (11) nach einem der vorangehenden Ansprüche 1 bis 7,
   **dadurch gekennzeichnet, dass**
   die erste wirksame Querschnittsfläche an einen Aktuator (1) und die zweite wirksame Querschnittsfläche an das Dosierventil (13) mechanisch gekoppelt sind.

**9.** Dosierventil (13) nach Anspruch 8,
**dadurch gekennzeichnet, dass**
die erste wirksame Querschnittsfläche durch einen ersten Kolben (3) und/oder die zweite wirksame Querschnittsfläche durch einen zweiten Kolben (5) erzeugt sind.

**10.** Dosierventil (13) nach Anspruch 8 oder 9,
**dadurch gekennzeichnet, dass**
die erste wirksame Querschnittsfläche den ersten Balg (20) senkrecht zu einer Richtung des Hubs zu einem Piezoaktuator (1) hin begrenzt und/oder die zweite wirksame Querschnittsfläche den zweiten Balg (22) senkrecht zu der Richtung des Hubs zum Dosierventil (13) hin begrenzt.

**11.** Dosierventil (13) nach Anspruch 8, 9 oder 10,
**dadurch gekennzeichnet, dass**
die zweite wirksame Querschnittsfläche an eine Kugel oder eine Nadel des Dosierventils (13) zum Öffnen und Schließen des Dosierventils (13) mechanisch gekoppelt ist.

**12.** Dosierventil (13) nach einem der Ansprüche 8 bis 11,
**dadurch gekennzeichnet, dass**
zwischen zweiter wirksamer Querschnittsfläche und dem Dosierventil (13) eine Rückstellfeder (26) zum Erzeugen einer Gegenkraft gegen ein Vergrößern des zweiten Volumens positioniert ist.

**13.** Verwendung eines Dosierventils (13) nach einem der Ansprüche 8 bis 12,
**gekennzeichnet durch**
dosiertes Zuführen eines Fluids in ein weiteres Volumen.

**14.** Verwendung nach Anspruch 13,
**gekennzeichnet durch**
dosiertes Zuführen von Gas (15) oder Benzin in eine Brennkammer (16).

**Claims**

**1.** Stroke transmitter (11), wherein a first volume (4a) which can be varied by means of a first effective cross-sectional area (A1) and which is enclosed by a first housing component (2,3;20), and a second volume (4b) which can be varied by means of a second effective cross-sectional area (A2) and which is enclosed by a second housing component (2a,5;22) are filled with a fluid (32) and are produced in a fluid exchange with one another by means of a throttling port (8) in such a way that a stroke of the second effective cross-sectional area corresponds to the product of a stroke of the first effective cross-sectional area with a ratio of the first effective cross-sectional area to the second effective cross-sectional area, wherein an overall housing (2,3,2a,5;20,22) externally delimits a total volume (4) made up of the sum of first volume (4a) and second volume (4b), **characterised in that** at least one displacement element (34,36) is positioned in the total volume (4), wherein the overall housing (2,3,2a,5;20,22), the fluid (32) and all of the displacement elements (34,36) are coordinated to complement one another in such a way that a change in volume of the overall housing (2,3,2a,5;20,22) caused by a change in temperature corresponds to a combined change in volume of the fluid (32) and of all of the displacement elements (34, 36) caused by said change in temperature,
wherein the first housing component is produced by means of a first bellows (20) and/or the second housing component is produced by means of a second bellows (22), wherein respective extensions of a displacement element (34) are produced transversely to a direction of the stroke into concave protrusions of the associated bellows (20).

**2.** Stroke transmitter (11) according to claim 1,
**characterised in that**
a product made up of volume and volume expansion coefficient of the overall housing (2,3,2a,5;20,22) corresponds to the sum of a product made up of volume and volume expansion coefficient of the fluid (32) and of respective products made up of volume and volume expansion coefficient of all of the displacement elements (3,5;34,36).

**3.** Stroke transmitter (11) according to claim 1 or 2,
**characterised in that**
at least one section of the overall housing is additionally or alternatively the at least one displacement element and said section is then associated in terms of volume and volume expansion coefficient, not with the overall housing, but with the displacement elements.

4. Stroke transmitter (11) according to claim 1, 2 or 3,
   **characterised in that**
   the first housing component is produced by means of a first cylinder (2) and a first piston (3) guided therein, and/or the second housing component is produced by means of a second cylinder (2a) and a second piston (5) guided therein.

5. Stroke transmitter (11) according to claim 4,
   **characterised in that**
   at least one of the two pistons (3, 5) is additionally or alternatively the at least one displacement element and said piston (3, 5) is then associated in terms of volume and volume expansion coefficient, not with the overall housing, but with the displacement elements.

6. Stroke transmitter (11) according to one of claims 1 to 5,
   **characterised in that**
   the material of displacement elements (3, 5; 34, 36) is fused quartz glass, the material of an overall housing (20, 22) is steel, and the fluid (32) is hydraulic oil.

7. Stroke transmitter (11) according to one of the preceding claims,
   **characterised in that**
   an extension of a displacement element (34) along one direction of the stroke extends beyond an extension of the associated bellows (20) along said direction.

8. Metering valve (13) having a stroke transmitter (11) according to one of the preceding claims 1 to 7,
   **characterised in that**
   the first effective cross-sectional area is mechanically coupled to an actuator (1) and the second effective cross-sectional area is mechanically coupled to the metering valve (13).

9. Metering valve (13) according to claim 8,
   **characterised in that**
   the first effective cross-sectional area is produced by means of a first piston (3) and/or the second effective cross-sectional area is produced by means of a second piston (5).

10. Metering valve (13) according to claim 8 or 9,
    **characterised in that**
    the first effective cross-sectional area delimits the first bellows (20) at right angles to a direction of the stroke toward a piezoelectric actuator (1) and/or the second effective cross-sectional area delimits the second bellows (22) at right angles to the direction of the stroke toward the metering valve (13).

11. Metering valve (13) according to claim 8, 9 or 10,
    **characterised in that**
    the second effective cross-sectional area is mechanically coupled to a ball or a needle of the metering valve (13) for the purpose of opening and closing the metering valve (13).

12. Metering valve (13) according to one of claims 8 to 11,
    **characterised in that**
    a return spring (26) is positioned between second effective cross-sectional area and the metering valve (13) for the purpose of generating a counterforce against an increase in size of the second volume.

13. Use of a metering valve (13) according to one of claims 8 to 12,
    **characterised by**
    metered feeding of a fluid into a further volume.

14. Use according to claim 13,
    **characterised by**
    metered feeding of gas (15) or gasoline into a combustion chamber (16).

**Revendications**

1. Dispositif de transmission de course (11), un premier volume (4a) entouré par une première partie constitutive de logement (2, 3; 20), pouvant être modifié au moyen d'une première surface de section active (A1), et un second volume (4b) entouré par une seconde partie constitutive de logement (2a, 5; 22), pouvant être modifié au moyen d'une seconde surface de section active (A2), étant rempli d'un liquide (32) et étant conçus d'une manière permettant un échange de liquide réciproque au moyen d'un orifice d'étranglement (8), de façon qu'une course de la seconde surface de section active corresponde au produit d'une course de la première surface de section active par un rapport de la première surface de section active à la seconde surface de section active, un logement d'ensemble (2, 3, 2a, 5; 20, 22) limitant sur l'extérieur un volume total (4) égal à la somme du premier volume (4a) et du second volume (4b), **caractérisé en ce qu'**au moins un corps de déplacement (34, 36) est positionné dans le volume total (4), le logement d'ensemble (2, 3, 2a, 5; 20, 22), le liquide (32) et tous les corps de déplacement (34, 36) étant ajustés les uns par rapport aux autres de manière à ce qu'une variation de volume du logement d'ensemble (2, 3, 2a, 5; 20, 22) provoquée par une variation de température corresponde à une variation de volume commune du liquide (32) et de tous les corps de déplacement (34, 36) provoquée par cette variation de température, la première partie constitutive de logement étant produite au moyen d'un premier soufflet (20) et/ou la seconde partie constitutive de logement étant produite au moyen d'un second soufflet (22), des extensions respectives d'un corps de déplacement (34) perpendiculairement à une direction de la course entrant dans des courbures concaves du soufflet (20) associé.

2. Dispositif de transmission de course (11) selon la revendication 1, **caractérisé en ce qu'**un produit du volume par un coefficient de dilatation volumique du logement d'ensemble (2, 3, 2a, 5; 20, 22) correspond à la somme d'un produit du volume par un coefficient de dilatation volumique du liquide (32) et des produits respectifs des volumes par des coefficients de dilatation volumique de tous les corps de déplacement (3, 5; 34, 36).

3. Dispositif de transmission de course (11) selon la revendication 1 ou 2, **caractérisé en ce qu'**au moins une zone du logement d'ensemble est, en plus ou alternativement, l'au moins un corps de déplacement et cette zone n'est alors pas associée au logement d'ensemble pour ce qui est de son volume et de son coefficient de dilatation volumique, mais associée aux corps de déplacement.

4. Dispositif de transmission de course (11) selon la revendication 1, 2 ou 3, **caractérisé en ce que** la première partie constitutive de logement est produite au moyen d'un premier cylindre (2) et d'un premier piston (3) guidé dans celui-ci et/ou la seconde partie constitutive de logement est produite au moyen d'un second cylindre (2a) et d'un second piston (5) guidé dans celui-ci.

5. Dispositif de transmission de course (11) selon la revendication 4, **caractérisé en ce qu'**au moins un des deux pistons (3, 5) est, en plus ou alternativement, l'au moins un corps de déplacement et ce piston (3, 5) n'est alors pas associé au logement d'ensemble, pour ce qui est de son volume et de son coefficient de dilatation volumique, mais associé aux corps de déplacement.

6. Dispositif de transmission de course (11) selon l'une des revendications 1 à 5, **caractérisé en ce que** le matériau des corps de déplacement (3, 5; 34, 36) est du verre de quartz, le matériau d'un logement d'ensemble (20, 22) est de l'acier et le liquide (32) est une huile hydraulique.

7. Dispositif de transmission de course (11) selon l'une des revendications précédentes, **caractérisé en ce qu'**une étendue d'un corps de déplacement (34) le long d'une direction de la course dépasse une étendue du soufflet (20) correspondant le long de cette direction.

8. Soupape de dosage (13) pourvue d'un dispositif de transmission de course (11) selon l'une des revendications précédentes 1 à 7, **caractérisée en ce que** la première surface de section active est couplée mécaniquement à un actionneur (1) et la seconde surface de section active est couplée mécaniquement à la soupape de dosage (13).

9. Soupape de dosage (13) selon la revendication 8, **caractérisée en ce que** la première surface de section active est produite par un premier piston (3) et/ou la seconde surface de section active est produite par un second piston (5).

10. Soupape de dosage (13) selon la revendication 8 ou 9, **caractérisée en ce que** la première surface de section active limite le premier soufflet (20) perpendiculairement à une direction de la course vers un actionneur piézoélectrique (1) et/ou la seconde surface de section active limite le second soufflet (22) perpendiculairement à la direction de la course vers la soupape de dosage (13).

11. Soupape de dosage (13) selon la revendication 8, 9 ou 10, **caractérisée en ce que** la seconde surface de section active est couplée mécaniquement à une bille ou un pointeau de la soupape de dosage (13) pour ouvrir et fermer la soupape de dosage (13).

12. Soupape de dosage (13) selon l'une des revendications 8 à 11, **caractérisée en ce qu'**un ressort de rappel (26) est positionné entre la seconde surface de section active et la soupape de dosage (13) pour produire une force antagoniste s'opposant à une augmentation du second volume.

13. Utilisation d'une soupape de dosage (13) selon l'une des revendications 8 à 12, **caractérisée par** l'alimentation dosée d'un fluide dans un autre volume.

14. Utilisation selon la revendication 13, **caractérisée par** l'alimentation dosée de gaz (15) ou d'essence dans une chambre de combustion (16).

## FIG 1

## FIG 2

FIG 3

1

4a A1 20

11

8

24

4

4b

A2 22

26

15 16

13

FIG 4

30

32

34

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007016866 A1
- DD 277522 A1
- DE 19646847 A1